# EUROPEAN PATENT APPLICATION

(11) **EP 1 010 996 A1**
(43) Date of publication of application: **21.06.2000**
(21) Application number: 98204280.6
(22) Date of filing: 17.12.1998
(51) Int. Cl.: G02B 5/30, G02F 1/1335, C08L 1/12, C09K 19/38

(54) **Method of producing optical films on triphenylphosphate-containing cellulose triacetate substrate**

(71) Applicant: Dejima Tech B.V., 6827 AV Arnhem (NL)
(72) Inventor: Erdhuisen, Erwin Wilhelmus, 6921 LG Duiven (NL)
(74) Representative: Schalkwijk, Pieter Cornelis

(57) **Abstract**

The invention pertains to a method of producing an optically functional film on a triphenylphosphate-containing cellulose triacetate substrate, comprising the steps of:
(a) coating a liquid crystalline material onto cellulose triacetate by applying a solution of the liquid crystalline material in a casting solvent having the solution parameters d(T)>6, preferably >8.6 and 0≤d(Hb)<2.2, preferably 0≤(Hb)≤2.0;
(b) removing the solvent; and
(c) orienting the liquid crystalline material.

## Description

The present invention pertains to a method of producing optical films on triphenylphosphate-containing cellulose triacetate substrate. More particularly, it relates to a method of obtaining an optically functional film for compensating or adjusting phase difference or optical rotatory power using the orientation of a high-molecular liquid crystal polymer, an optically functional film obtained by said method, and a liquid crystal display using said optically functional film.

Optically functional films in which use is made of the orientation of monomeric or high-molecular liquid crystal material phase difference plates, optical rotators, selective wave reflectors, and the like are under study. Such optically functional films have a structure consisting of a substrate made of a transparent isotropic material and a high-molecular liquid crystal material laminated onto the substrate.

For the substrate use is made of a glass sheet or a plastic sheet with little residual phase difference, such as a cellulose triacetate film. A liquid crystal material is usually oriented on the substrate itself by rubbing directly before lamination, or the substrate covered with an orienting film made of, for instance, a polyimide is rubbed.

As a method of laminating a monomeric or high-molecular liquid crystal material onto a substrate generally a solution for casting is used, and in this case the liquid crystal material is oriented by heating up to higher than its clearing temperature (Tc), followed by cooling to a temperature between the glass transition temperature (Tg) and the clearing temperature.

Substrates available for laminating a liquid crystal material are those rubbed directly themselves to be oriented, such as a cellulose triacetate film, and those covered with an extra orienting film made of a polyimide. If the two types are compared, substrates rubbed directly themselves without using any orienting film provide better productivity and are low in cost. In addition, if the heat-resisting temperature of substrates such as cellulose triacetate film is lower than the baking temperature of the orienting film, a substrate covered with an orienting film such as a polyimide film cannot be used.
On the other hand, for use as an optically functional film it is required that the substrate be highly transparent and have as little residual phase difference as possible. Materials satisfying these conditions include glass and cellulose triacetate, but considering impact resistance and the reduction of film weight, a plastic film such as cellulose triacetate film is preferred.

A method for producing liquid crystalline polymers and films made thereof on cellulose triacetate substrate is disclosed in US 5,688,436. The disclosed method comprises dissolving a liquid crystalline oligomer and a photopolymerization initiator in dichloromethane, followed by coating this solution onto the cellulose triacetate substrate. In one example toluene rather than dichloromethane was used as solvent. Because solvent resistance of the substrate is of eminent importance for obtaining a highly transparent and optically isotropic substrate, it was disclosed in PCT patent application WO98/04017 that an improved casting solvent for the liquid crystalline material when producing optical films on cellulose triacetate substrate, was found to be anisole.

Although cellulose triacetate is very suitable as a transparent substrate, its relative stiffness precludes the use thereof in many applications. Furthermore, cellulose triacetate substrate is prone to tearing up when the substrate is subjected to bending-stress. To prevent these disadvantages, triphenylphosphate is added as a plasticizer to cellulose triacetate. However, although triphenylphosphate-containing cellulose triacetate is advantageous with respect to its practical usefulness as an optical film, its use raises difficulties in terms of the method of preparing the optical film. The main problem when using triphenylphosphate-containing cellulose triacetate substrate concerns obtaining scattered optical films. It is believed that this phenomenon is the result of phase separation of the liquid crystalline material due to minor extraction of triphenylphosphate from cellulose triacetate. Such scattering was regularly observed when usual solvents, such as anisole, were used. Dichloromethane, another usual solvent, cannot be used in commercial processes because of its low boiling point and because it affects the surface of the cellulose triacetate substrate.

It is an object of the present invention to solve this problem, i.e., to provide a method for producing an optically functional film on the basis of triphenylphosphate-containing cellulose triacetate substrate which does not require any orienting film and which is low in cost and gives excellent productivity, and in which the smoothness of the substrate and the orientation of the liquid crystal material are not impaired by the solvent. The other objects of the present invention are to provide an optically functional film obtained by said production process, and a liquid crystal display in which said optically functional film is used.

It has surprisingly been found that it is possible to obtain an optically functional film containing liquid crystal material laminated onto a triphenylphosphate-containing cellulose triacetate substrate by solution casting, which film is oriented without any defect caused to the substrate by the solvent and with the liquid crystal material being uniformly oriented, viz. by using a method of producing an optically functional film on a triphenylphosphate-containing cellulose triacetate substrate comprising the steps of:
(a) coating a liquid crystalline material on cellulose triacetate by applying a solution of liquid crystalline material in a casting solvent (or a mixture of solvents) having the solution parameters d(T)>6, preferably >8.6, and 0≤d(Hb)<2.2, preferably 0≤d(Hb)≤<2.0;
(b) removing the solvent; and
(c) orienting the liquid crystalline material.
Although triphenylphosphate is soluble in these solvents, it is remarkable that this plasticizer is not extracted from the substrate in such quantities that problems such as phase separation occur during the orientation process.
The present invention further is a method of producing an optically functional film comprising the steps of laminating liquid crystal material onto a rubbed triphenylphosphate-containing cellulose triacetate film by casting a solution of the liquid crystal material in the solvent of this invention, and orienting it.

The solution parameters d(T) and d(Hb) stand for the total solubility and the hydrogen bridge forming parameters, respectively. d(T) (in some references indicated as δ or δ_{T}) is a measure for the solubility and is composed of the effects of hydrogen bridge forming (d(Hb), sometimes indicated as δ_{H}), polar groups (δ_{P}), and non-polar groups (δ_{NP}). These solubility parameters can be determined according to the method of K.L. Hoy (J. Coated Fabrics, 19 (1989), 53-67). Calculated d(T) values were published by K.L. Hoy in J. Paint Tech., 42 (541), February 1970, 76-118.

The triphenylphosphate-containing cellulose triacetate preferably is formed as the protective layer of a polarizing plate.

In the case of the method of producing optically functional film, preferably said solvent is benzene substituted with one or more groups selected from alkyl, haloalkyl, and halogen.

More preferable is the method wherein the casting solvent is selected from toluene, o-, m-, or p-xylene, mesitylene, pseudocumene, chlorobenzene, and mixtures thereof.

Preferably, the liquid crystal material is a monomeric or high-molecular weight material. More preferably, this material shows twisted nematic orientation.

The optically functional film is obtained by the method of producing optically functional film according to this invention.

Another version of the present invention is a liquid crystal display comprising the optically functional film as described above and a liquid crystal display cell.

The thickness of the substrate is not especially limited, but if the substrate is mounted as a member of an optical device such as a phase difference plate, the thickness preferably is 10 µm or more in view of the handling convenience for mounting.

The surface of the substrate can be rubbed by any one of all publicly known means, and the method is not especially limited. For example, while a long substrate film is being driven to run, a rubbing roll installed so as to enable it to be set at an optional angle in the running direction of the substrate film is rotated in contact with the surface of the substrate, in order to rub it. The substrate feeding speed, the rubbing angle, the rotation speed of the rubbing roll, the rubbing pressure, and the like, can be properly set to achieve the intended rubbing effect.

The material of the surface of the rubbing roll used is not especially limited. However, in view of the fact that the optically functional film obtained according to the method of producing optically functional film of the present invention is used for optical applications, it is preferable to select a material unlikely to be flawed, such as the felt of nylon, cotton or polyester, and the like.

The high-molecular liquid crystal material satisfying this condition which is used in the present invention usually has a molecular weight of 1,000 to 200,000, though it is not specifically limited thereto.

Since it is desired that the orientation will not be disturbed in the ordinary service environment of the optically functional film, the clearing temperature of the liquid crystal material preferably is 50°C or higher. Furthermore, considering that the substrate must not be deformed at the orientation temperature, it is desired that the clearing temperature of the liquid crystal material is lower than 120°C, but at least lower than the Tg of the substrate.

To prevent the orientation from being disturbed in the service environment of the optically functional film, a liquid crystal material with a glass transition temperature Tg of lower than 50°C can be used, and if such a material is used, the liquid crystal material can be cross-linked to stabilize the orientation.

The liquid crystal material can be a vitreous liquid crystal material, or it can be a side chain-type high-molecular liquid crystal polymer based on a polyether, polysiloxane, polyacrylate, polymethacrylate or polyvinyl ether, and the like.

The monomeric material, after having been oriented, can be used as such or, where applicable, be UV polymerized in the presence of a UV initiator or UV cross-linked, for instance, by adding a diacrylate or a triacrylate, in order to improve its stability. Of course, thermal polymerization can also be adopted instead of UV polymerization.

The liquid crystal material used in the optically functional film of the present invention allows homeotropic, uniform planar, or twisted nematic orientation, each of these with or without tilt. The best phase difference compensation effect can be obtained in combination with an STN-type liquid crystal display cell when the optically functional film is twisted at the same twist angle as the liquid crystal of the liquid crystal display cell, but in the reverse direction.
Therefore, when the optically functional film of the present invention is used as a phase difference film in combination with an STN-type liquid crystal display cell, the twist angle of the liquid crystal polymer of the optically functional film is kept equal to the twist angle of the liquid crystal of the liquid crystal display cell, but the direction is reversed. Preferably, the retardation and temperature dependency of the optically functional film and the display cell are also substantially the same.

In the optically functional film of the present invention, to control the twisting direction (right-hand or left-hand) of the liquid crystal material, and to achieve the desired twist angle, an optically active substance called a chiral dopant can also be added to the liquid crystal material. The optically active substance can be any optional optically active substance, and can be selected, for example, from cholesterol derivatives, 2-octyl 4-(4-hexyloxybenzoyloxy)benzoate, and the like. The optically active substance is usually added in an amount of 10 wt.% or less, based on the total weight of the liquid crystal material.

Optically active groups can also be introduced into the liquid crystal material.
Furthermore, in the present invention, the solution casting can be by any publicly known method and is not specifically limited. For example, it can be achieved by roll coating, knife coating, die coating, gravure coating, offset gravure coating, microgravure coating, curtain coating, lip coating, immersion or spin coating, and the like. The substrate is coated with a liquid crystal material solution according to any one of these methods and dried by hot air drying or infrared heating, and the like, to remove the solvent.

The liquid crystal material is oriented by heat treating to higher than the temperature required to transform the liquid crystal material from the glassy state to the liquid crystal phase, and cooling. The treatment temperature must of course be within the heat resisting temperature range of the substrate.

The optically functional film of the present invention is obtained by the method of producing optically functional film according to the present invention and has a liquid crystal material laminated onto a substrate and oriented as described above.

The liquid crystal display of the present invention is composed of the optically functional film of the present invention and a liquid crystal display cell. While the liquid crystal display cell is not specifically limited, for compensating phase difference an STN-type liquid crystal display cell, and the like, can be used.

The optically functional film obtained by the method of producing optically functional film according to the present invention can be used as a phase difference plate for compensating phase difference in said liquid crystal display, optical rotor, or selective wave reflector, and the like.

The present invention is described below based on examples, but is not limited thereby or thereto.

### Solvent resistance

The solvent resistance of cellulose triacetate comprising triphenylphosphate was determined as follows. A small quantity of about 10 µl of the solvent was applied onto the cellulose triacetate substrate, which contained 12 wt.% triphenylphosphate. After 2 min of contact time the solvent was dripped down from the surface of the substrate and the substrate was dried. The effect of the solvent on the surface of the substrate was visually determined as follows.

| solvent | d(T) | d(Hb) | result |
|---|---|---|---|
| p-cymene | 8.2 | 0 | no effect visible |
| Cumene | 8.6 | 0 | no effect visible |
| Mesitylene | 8.84 | 0 | no effect visible |
| Pseudocumene | 8.94 | 0 | no effect visible |
| o-xylene | 9.06 | 0 | no effect visible |
| Toluene | 8.93 | 0.8 | no effect visible |
| p-xylene | 8.83 | 0.97 | no effect visible |
| m-xylene | 8.88 | 1.17 | no effect visible |
| Chlorobenzene | 9.61 | 1.67 | no effect visible |
| Diisobutyl ketone | 8.06 | 1.88 | no effect visible |
| Dibutyl ether | 7.76 | 2.2 | no effect visible |
| Methylisobutyl ketone | 8.58 | 2.87 | no effect visible |
| Tetrahydrofuran | 9.05 | 3.25 | severe damage to substrate |
| n-butyl acetate | 8.69 | 3.3 | small circle with residue visible |
| Anisole | 9.75 | 3.54 | small circle with residue visible |
| 3-pentanone | 9.06 | 3.73 | small circle with residue visible |
| Cyclopentanone | 10.53 | 4.29 | severe damage to substrate |
| Methylethylketone | 9.45 | 4.63 | severe damage to substrate |
| Dichloromethane | 9.88 | 4.7 | severe damage to substrate |
| Acetone | 9.62 | 5.39 | severe damage to substrate |
| Diacetone alcohol | 9.78 | 6.14 | small circle with residue visible |
| 2-ethoxyethanol | 10.71 | 7.42 | small circle with residue visible |
| n-butanol | 11.6 | 7.55 | small circle with residue visible |

### Example 1

Retardation layers were applied onto cellulose triacetate containing 12 wt.% triphenylphosphate by spin-coating in a closed chamber to obtain long contact times of the solvent with the surface of the substrate. A 50 wt.% solution of liquid crystalline polyether A comprising 0.3-0.41 wt.% of ZLl-4571® (ex Merck, chiral dopant) was prepared by dissolution of polyether A in the selected solvent. 1.5 ml of this solution were spin-coated onto 7.5x7.5 cm² of the rubbed substrate by applying the solution and rotating the substrate 30 sec at 700 rpm (unless indicated otherwise), followed by 30 sec at 10 rpm. The LCP film was dried during 2 min at 120°C, after which the film was oriented during 1 to 2 h at 65°C.
Polyether A is polyether No. 19 of Example 16 of WO 97/23805.

Results with various solvents:
Mesitylene (0.30 wt.% of ZLl-4571 relative to LC polyether A): perfectly twisted oriented transparent retardation film (twist angle -400°) with a retardation value of 1600 nm (retardation value is product of layer thickness and optical birefringence).
Pseudocumene (0.41 wt% of ZLl-4571 relative to LC polyether A): perfectly twisted oriented transparent retardation film (twist angle -480°) with a retardation value of 1500 nm.
Chorobenzene (0.31 wt.% of ZLl-4571 relative to LC polyether A): perfectly twisted oriented transparent retardation film (twist angle -285°) with a retardation value of 1000 nm (spin-coated at 1000 instead of 700 rpm).

### Example 2

In a similar manner as described in Example 1, polyether B was spin-coated onto the substrate. Contrary to Example 1, rotation was performed during 30 sec at 500 rpm, followed by 30 sec at 10 rpm. The LCP film was dried during 2 min at 100°C, after which the film was oriented during 1 to 2 h at 40°C.

Polyether B was prepared in a similar manner to polymer A, except that 2,3-dihydroxypropyl 2-methyl-2-propenoate was replaced with PEG 200 (polyethyleneglycol MW 200) and 15 mole% rather than 8 mole% of 9-oxiranylnonyl 2-methyl-2-propenoate were added. Polyether B contains 19 mole% 2-methyl-2-propenoate groups incorporated into the polymer, and has Tg -12/5°C, Tc 66°C, and MW 3200.

Results with various solvents:
Toluene: perfectly uniform planar oriented transparent retardation film with a retardation value of 800 nm.
m-Xylene: perfectly uniform planar oriented transparent retardation film with a retardation value of 1000 nm.
Methylisobutyl ketone: slightly scattering retardation layer due to phase separation.
Anisole: scattering retardation layer due to severe phase separation.

## Claims

1. A method of producing an optically functional film on a triphenylphosphate-containing cellulose triacetate substrate, comprising the steps of:
(a) coating a liquid crystalline material onto cellulose triacetate by applying a solution of the liquid crystalline material in a casting solvent having the solution parameters d(T)>6, preferably >8.6 and 0≤d(Hb)<2.2, preferably 0≤d(Hb)≤2.0;
(b) removing the solvent; and
(c) orienting the liquid crystalline material.

2. The method according to claim 1 wherein the liquid crystalline material is oriented by direct rubbing of the substrate.

3. The method according to claim 1 or 2 wherein the casting solvent is benzene substituted with one or more groups selected from alkyl, haloalkyl, and halogen.

4. The method according to claim 1 or 2 wherein the casting solvent is selected from toluene, o-, m-, or p-xylene, mesitylene, pseudocumene, chlorobenzene, and mixtures thereof.

5. The method according to any one of the preceding claims wherein the liquid crystalline material is a monomer or high-molecular material.

6. An optically functional film for compensating or adjusting phase difference or optical rotatory power obtained by the method of any one of claims 1-5.

7. A liquid crystalline display comprising the film of claim 6.
